# EUROPEAN PATENT SPECIFICATION

(11) **EP 4 171 980 B1**
(45) Date of publication and mention of the grant of the patent: **09.12.2026**
(21) Application number: 21736691.3
(22) Date of filing: 04.06.2021
(51) Int. Cl.: B60K 1/00

(54) **CRAWLER VEHICLE, CONTROL METHOD AND COMPUTER PROGRAM OF SAID VEHICLE**
RAUPENFAHRZEUG, STEUERUNGSVERFAHREN UND COMPUTERPROGRAMM DES BESAGTEN FAHRZEUGS
VÉHICULE À CHENILLES, PROCÉDÉ DE COMMANDE ET PROGRAMME INFORMATIQUE DUDIT VÉHICULE

(30) Priority: 05.06.2020 IT 202000013378
(43) Date of publication of application: 03.05.2023
(73) Proprietor: PRINOTH S.p.A., 39049 Vipiteno (BZ) (IT)
(72) Inventor: KIRCHMAIR, Martin, 39049 Vipiteno (BZ) (IT); PAOLETTI, Alberto, 39049 Vipiteno (BZ) (IT)
(74) Representative: Studio Torta S.p.A.
(86) International application number: PCT/IB2021/054923
(87) International publication number: WO 2021/245621

(56) References cited:
- WO-A1-2010/103117
- WO-A1-2012/085882
- US-A1- 2010 122 860
- US-A1- 2012 205 171

## Description

### CROSS-REFERENCE TO RELATED APPLICATIONS

This patent application claims priority from Italian patent application no. 102020000013378 filed on 05/06/2020.

### TECHNICAL FIELD

The present invention relates to a crawler vehicle, in particular for the preparation of ski runs.

### BACKGROUND ART

Generally, a crawler vehicle of the type identified above comprises a frame; a cabin mounted on the frame; a propulsion system mounted on the frame; drive wheels actuated by the propulsion system; and tools powered by the propulsion system.

Typically, the propulsion system of said crawler vehicle comprises an internal combustion engine, a feed pump, a mechanical transmission configured to transmit power from the internal combustion engine to the feed pump, and hydraulic actuators, which are powered by the feed pump and are configured to drive the drive wheels and the tools. In this configuration, the internal combustion engine emits pollutant exhaust gases. A further known drawback of crawler vehicles is poor energy efficiency due to the difficulty of controlling the power output of the internal combustion engine so as to make the internal combustion engine work at the point of maximum efficiency regardless of the energy requirements of the crawler vehicle.

As examples, documents WO 2010/103117 and WO 2012/085882 disclose snow groomers equipped with respective internal combustion engines.

In recent decades, the increasing focus on reducing global pollution has led to the development of electric vehicles. Documents US 2012/205171 and US 2010/122860 disclose excavators driven by respective electric propulsion systems.

In general, the electric propulsion system allows highly efficient energy transmission with zero emissions of pollutant gases, but it has the disadvantage of introducing structural imbalances in vehicles, with the consequent need to redesign the frame and the structural parts of the vehicle. As a result, the costs of designing and building vehicles with electric propulsion systems are extremely high. Electric vehicles also place new demands on vehicle maintenance.

### DISCLOSURE OF INVENTION

One purpose of the present invention is to provide a snow groomer particularly for the preparation of ski runs which reduces the drawbacks referred to of the prior art; in particular, one purpose of the present invention is to provide a snow groomer of the above type that is environmentally friendly and is simple and cheap to design, build and maintain.

According to the present invention, a snow groomer is made for the preparation of ski runs; the snow groomer comprising:
- a frame;
- a cabin mounted on the frame;
- a first and a second drive wheel driven by a first and a second hydraulic motor respectively;
- a battery assembly and an electric motor fed by the battery assembly, which are mounted on said frame behind the cabin and mainly under the cabin; and
- a power transmission assembly configured to transmit power from the electric motor to said hydraulic motors.

Thanks to the present invention, the power transmission is highly efficient and with zero emissions of pollutant gases and, at the same time, the impact of the electric motor and the battery assembly on the structural characteristics of the snow groomer is extremely limited. In this way, the frame developed for currently known internal combustion engine crawler vehicles can be used. As a result, the design costs of the frame of the snow groomer are reduced.

In particular, the arrangement of the electric motor and the battery assembly allow the centre of gravity of the snow groomer to be kept low in a manner similar to the internal combustion engine and the fuel tank, so as to optimize the performance of the snow groomer, particularly when the snow groomer is advancing along slopes. In addition, the power transmission assembly to the drive wheels does not present any particular maintenance problems.

In particular, the snow groomer comprises at least one tool connected in movable way to the frame and actuated by a respective further hydraulic motor.

In this way, the at least one tool is powered by the electric motor via the power transmission assembly.

In particular, the power transmission assembly comprises a first pump hydraulically connected to the first hydraulic motor; a second pump hydraulically connected to the second hydraulic motor; at least a third pump hydraulically connected to the respective further hydraulic motor; and a mechanical transmission, which is arranged between the electric motor and said pumps and is configured to divide the power delivered by the electric motor between the pumps; said pumps being variable displacement pumps.

In this way, each pump is powered by the electric motor and in turn supplies a respective hydraulic utility. In addition, thanks to the mechanical transmission, in use, the power delivered by the electric motor is divided between said pumps depending on the particular operating requirements, so as to reduce energy consumption and increase the operating life of the battery assembly.

In particular, the snow groomer comprises an auxiliary power supply assembly; in particular, a fuel cell or an internal combustion engine or a further battery assembly.

In greater detail, the auxiliary power supply assembly is configured to recharge the battery assembly and is removable from the snow groomer.

This makes it possible, if necessary, to extend the duration of the snow groomer operations when the battery assembly is flat.

In particular, the battery assembly is detachably coupled to the snow groomer, preferably by means of a releasable coupling device, so as to facilitate replacement of the battery assembly and limit the downtime of the snow groomer. In other words, the flat battery assembly can be removed and replaced with another previously charged battery assembly, allowing the snow groomer to resume operations without the need to wait for the recharging time of the removed battery assembly.

In particular, the snow groomer comprises a control device configured to control the power delivered by the electric motor.

The control device is configured to independently control the speed of the electric motor and the displacement of the pumps in order to optimize the operating efficiency of the snow groomer.

In this way, it is possible to vary both the speed of the electric motor and the displacement of the pumps, so as to work at the point of maximum efficiency of said pumps while at the same time guaranteeing the power supply of the hydraulic motors in specific operating requirements.

In particular, the control device is configured to acquire the speed of the electric motor and the displacement of the pumps; and to control the speed of the electric motor and the displacement of the pumps by means of respective closed loop controls depending respectively on the acquired speed of the electric motor and the acquired displacement of the pumps.

In this way, the speed of the electric motor and the displacement of the pumps is adjusted quickly and precisely.

In particular, the control device is configured to acquire a requested hydraulic power to each hydraulic motor; controlling the speed of the electric motor and/or the displacement of the respective pump to satisfy the requested hydraulic power; and acquiring the hydraulic power transmitted to each hydraulic motor.

In this way, the energy efficiency of the snow groomer is further increased and the transmitted hydraulic power can be controlled via a first closed loop.

In particular, the control device is configured to acquire a requested running speed of the snow groomer; to control the speed of the electric motor and/or the displacement of the pumps to substantially match the requested running speed; and to acquire the running speed of the snow groomer.

In this way, the running speed of the snow groomer can be precisely controlled via a second closed loop.

In particular, the control device comprises a charge sensor configured to acquire the charge level of the battery assembly; the control device being configured to limit the power delivered by the electric motor when the acquired charge level falls below a predetermined threshold, so as to increase the operating duration of the snow groomer and/or allow the snow groomer to reach a charging station.

In particular, the control device is configured to calculate and provide a remaining operating time of the snow groomer based on said acquired charge level and on an expected average consumption of the snow groomer.

In this way, the remaining operating time of the snow groomer can be estimated and an operator controlling the snow groomer can be informed.

In particular, the control device is configured to calculate and provide a maximum operating distance based on said acquired charge level, on an expected average consumption of the snow groomer and on at least one between the GPS position of the snow groomer, the snowpack characteristics of the ski slopes and the driving style of a snow groomer operator.

In this way, the maximum operating distance of the snow groomer can be accurately estimated.

A further purpose of the present invention is to provide a control method of the snow groomer that reduces the drawbacks of the prior art highlighted herein.

According to the present invention a method of controlling the snow groomer as previously described is provided; the snow groomer further comprising at least one tool connected to the frame and actuated by a respective further hydraulic motor, and a power transmission assembly comprising a plurality of variable displacement pumps and configured to transmit power from the electric motor to said hydraulic motors; the method comprising the steps of independently controlling the speed of the electric motor and the displacement of the pumps in order to optimize the operational efficiency of the snow groomer.

In this way, it is possible to vary both the speed of the motor and the displacement of the pumps, so as to work at the point of maximum efficiency of said pumps while at the same time guaranteeing the power requested by the specific operating requirements.

In other words, the power supplied to the hydraulic motors is controlled by adjusting two mutually independent parameters (the speed of the electric motor and the displacement of the pumps) so as to reduce the energy consumption of the snow groomer and increase the duration of a battery assembly recharge.

By way of example, since the torque curve of the electric motor is substantially constant below a threshold value, it is possible to vary the speed of the electric motor below the threshold value to optimize the efficiency of one of the pumps while keeping the torque of the electric motor constant.

A further purpose of the present invention is to provide a computer program that reduces the drawbacks of the prior art highlighted herein.

According to the present invention, a computer program configured to control a snow groomer is provided which is directly loadable into a memory of the computer to carry out the steps of the method described above when the program is run by the computer.

Thanks to the program, the method can be implemented easily and economically.

In addition, the present invention relates to a program product comprising a readable medium on which the program is stored.

### BRIEF DESCRIPTION OF THE DRAWINGS

Further characteristics and advantages of the present invention will become clear from the following description of a non-limiting example of an embodiment made with reference to the appended drawings, wherein:
- Figure 1 is a side elevation view, with parts removed for clarity and parts shown schematically, of a crawler vehicle made according to the present invention;
- Figure 2 is a view from above, with parts removed for clarity, of the crawler vehicle of Figure 1;
- Figure 3 is a block diagram of the crawler vehicle of Figure 1; and
- Figures 4 and 5 are graphs of the mechanical characteristics of respective components of the crawler vehicle of Figure 1.

### BEST MODE FOR CARRYING OUT THE INVENTION

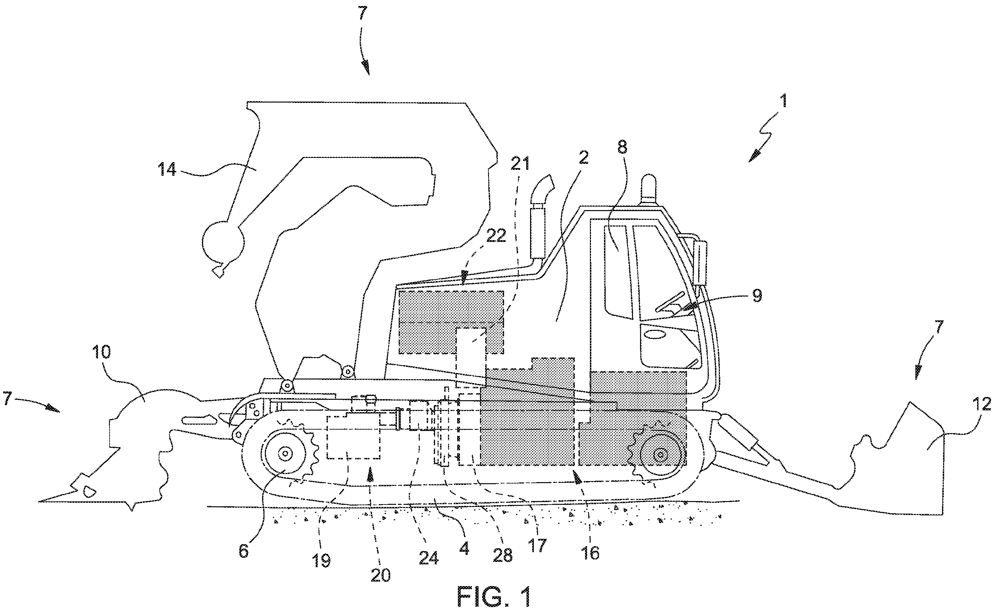

With reference to Figure 1, reference numeral 1 globally denotes a crawler vehicle for the preparation of ski runs.

In particular, the crawler vehicle 1 is a snow groomer.

In greater detail, the crawler vehicle 1 is used for preparing alpine ski runs, and/or cross-country ski runs, and/or ski jumping ramps, and/or "half pipe", and/or "snowpark" type ski runs.

According to a further embodiment, the crawler vehicle 1 may be used for operations in an agricultural context, such as for harvesting and/or handling agricultural products and/or for forage silage and/or for harvesting and/or handling bagasse.

Furthermore, according to a further embodiment, the crawler vehicle 1 comprises a cutter preferably positioned on the front side of the vehicle and may be used for cutting vegetation.

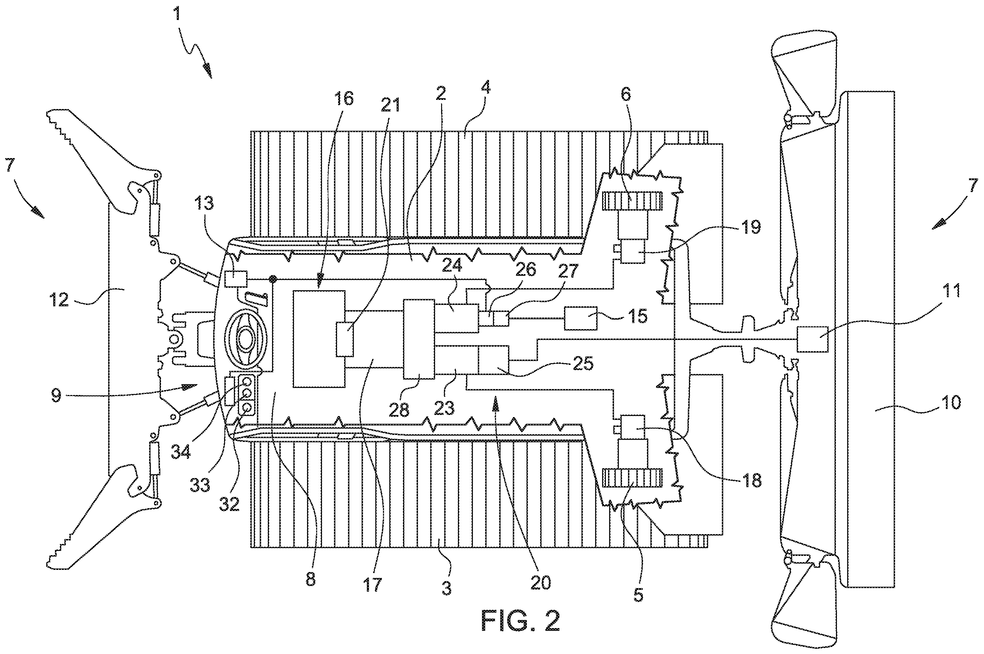

The crawler vehicle 1 comprises a frame 2; a track 3 (Figure 2); a track 4; a drive wheel 5 (Figure 2) and a drive wheel 6 independent of each other and coupled to the track 3 (Figure 2) and the track 4, respectively; a plurality of hydraulically actuated tools 7 connected to the frame 2; a cabin 8 mounted on the frame 2; and a user interface 9 placed inside the cabin 8.

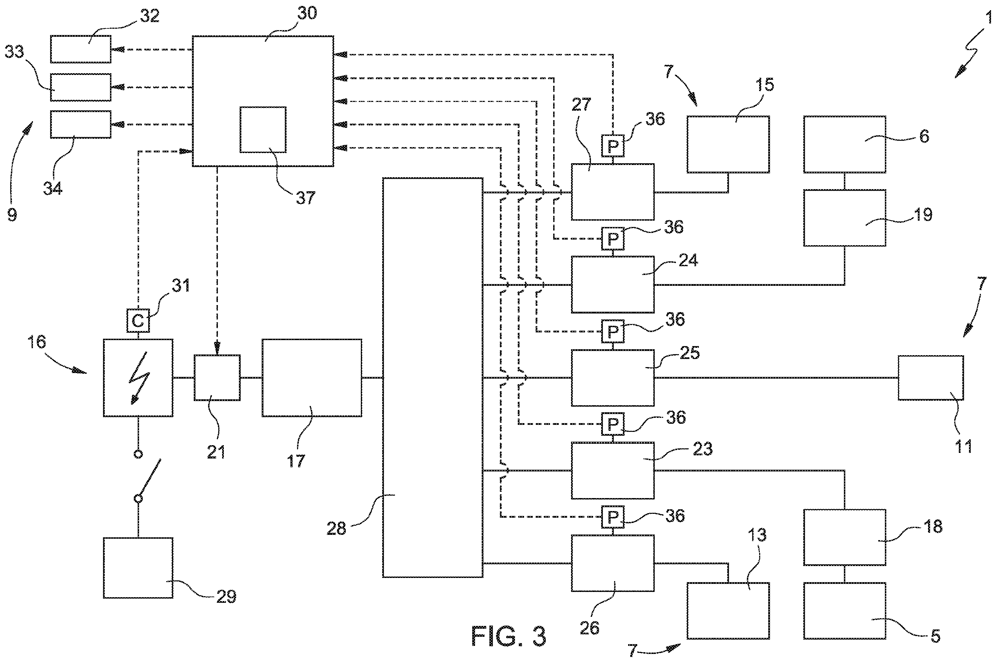

In the non-limiting case described and illustrated herein of the present invention, the tools 7 comprise a cutter 10 movably connected to the frame 2 and actuated by a hydraulic motor 11 (Figures 2 and 3), a shovel 12 movably connected to the frame 2 and actuated by a hydraulic motor 13 (Figures 2 and 3); and a winch 14 also movably connected to the frame 2 and actuated by a hydraulic motor 15 (Figures 2 and 3).

Within the scope of this description, the term "hydraulic motor" means any device for converting hydraulic power into mechanical power and encompasses within its meaning any type of hydraulic actuator and hydraulic cylinder.

According to one, non-limiting embodiment of the present invention, the cabin 8 is arranged at the front of the crawler vehicle 1 and faces the shovel 12. In such a configuration, the winch 14 is arranged at the rear of the crawler vehicle 1, behind the cabin 8.

The crawler vehicle 1 comprises a battery assembly 16 and an electric motor 17 powered by the battery assembly 16, which are mounted on said frame 2 behind the cabin 8 and predominantly under the cabin 8; two hydraulic motors 18 (Figures 2 and 3) and 19, which actuate the drive wheels 5 and 6, respectively; and a power transmission assembly 20, which connects the electric motor 17 to the hydraulic motors 18 (Figures 2 and 3) and 19 and to the tools 7, and is configured to transmit power from the electric motor 17 to the hydraulic motors 18 (Figures 2 and 3) and 19 and to the tools 7.

Each of the tools 7 may assume a plurality of positions relative to the frame 2. These positions are controlled and actuated by the hydraulic motors 11, 13 and 15 (Figures 2 and 3) via the power transmission assembly 20.

In addition, the crawler vehicle 1 comprises an inverter 21 configured to transmit electrical power from the battery assembly 16 to the electric motor 17; and a further battery assembly 22 placed behind the cabin 8 and above the electric motor 17 and the power transmission assembly 20.

The battery assembly 16 and the battery assembly 22 are detachably coupled to the crawler vehicle 1, preferably via respective releasable coupling devices, not shown in the appended figures, so as to facilitate replacement of the battery assemblies 16 and 22.

In particular, the battery assembly 16 is removable from the front of the crawler vehicle 1. The battery assembly 22 is removable from the rear of the cabin 8.

According to an alternative embodiment, not shown in the appended figures, the battery assembly 16 is replaced by a power source external to the crawler vehicle 1, such as, for example, a cable configured to connect the electric motor 17 to the power grid or a pantograph power supply system.

With reference to Figures 2 and 3, the power transmission assembly 20 comprises five pumps 23, 24, 25, 26 and 27 mechanically connected to and powered by the electric motor 17.

In particular, the pump 23 is hydraulically connected to the hydraulic motor 18; pump 24 is hydraulically connected to the hydraulic motor 19; pump 25 is hydraulically connected to the hydraulic motor 11 of the cutter 10; pump 26 is hydraulically connected to the hydraulic motor 13 of the shovel 12; pump 27 is hydraulically connected to the hydraulic motor 15 of the winch 14.

In more detail, the hydraulic connection between each pump 23, 24, 25, 26 and 27 and the respective hydraulic motor 11, 13, 15, 18 and 19 is made possible by means of a respective hydraulic circuit in which the fluid for transmitting the hydraulic power flows.

In the case described and illustrated herein, the pumps 23, 24, 25, 26 and 27 are variable displacement pumps.

Moreover, the power transmission assembly 20 comprises a mechanical transmission 28, arranged between the electric motor 17 and the pumps 23, 24, 25, 26, and 27 and configured to transmit mechanical power from the electric motor 17 to the pumps 23, 24, 25, 26, and 27 and to distribute the power delivered by the electric motor 17 between the pumps 23, 24, 25, 26, and 27.

In addition, the crawler vehicle 1 comprises an auxiliary power assembly 29, which, according to various embodiments of the present invention, may include a fuel cell or internal combustion engine or an additional battery assembly.

According to one, non-limiting embodiment of the present invention, the auxiliary power supply assembly 29 is configured to charge the battery assembly 16 and /or the battery assembly 22 and is removable from the crawler vehicle 1.

With reference to Figure 3, the crawler vehicle 1 comprises a control device 30 configured to control the power delivered by the electric motor 17.

In particular, the control device 30 is configured to optimize the power consumption of the electric motor 17.

The control device 30 comprises a charge sensor 31 configured to acquire the charge level of the battery assemblies 16 and/or 22. The control device 30 is configured to limit the power delivered by the electric motor 17 when the acquired charge level falls below a predetermined threshold.

The user interface 9 comprises an indicator 32 configured to emit a signal indicative of the charge level acquired by the charge sensor 31.

In addition, the control device 30 is configured to calculate and provide a remaining operating time of the crawler vehicle 1 based on said acquired charge level and on an expected average consumption of the crawler vehicle 1.

The user interface 9 comprises an indicator 33 configured to emit a signal indicative of the remaining operating time of the crawler vehicle 1.

In addition, the control device 30 is configured to acquire the GPS position of the crawler vehicle 1 and to link the acquired GPS position to a map, so as to determine, for example, the incline of the slope on which the crawler vehicle 1 is positioned.

The control device 30 is configured to calculate and provide a maximum operating distance based on said acquired charge level, on an expected average consumption of the crawler vehicle 1 and on at least one between the GPS position of the crawler vehicle 1, the snowpack characteristics of the ski slopes and the driving style of a crawler vehicle operator 1.

In more detail, the control device 30 is configured to use slope incline information derived from the GPS location of the crawler vehicle 1 to determine the energy consumption of the crawler vehicle 1 and to calculate the maximum operating distance of the crawler vehicle 1.

The user interface 9 comprises an indicator 34 configured to emit a signal indicative of the maximum forecast operating distance of the crawler vehicle 1.

In the case described and illustrated in Figure 2, the user interface 9 is a graphic interface, such as a screen, configured to display indicators 32, 33 and 34 to inform an operator controlling the crawler vehicle 1.

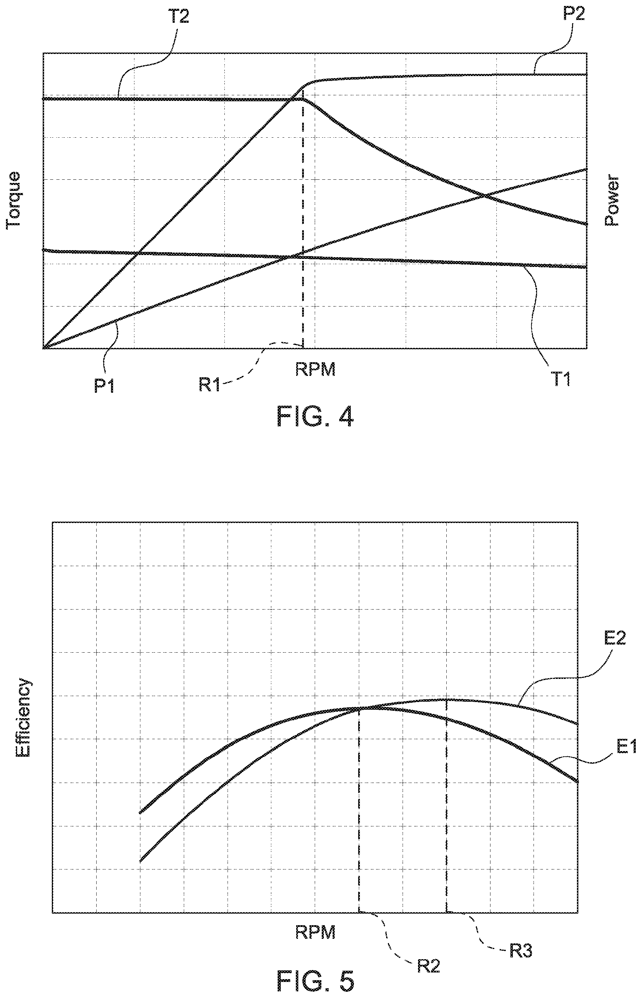

With reference to Figure 4, a plot of torque curves T1 and T2 and power curves P1 and P2 as a function of the electric motor speed 17 is shown. Said graph shows the typical relationships between the torque and the speed of the electric motor 17 and between the power and the speed of the electric motor 17.

In particular, the torque curve T1 and the power curve P1 show characteristic curves of the electric motor 17 under continuous operating conditions, while the torque curve T2 and the power curve P2 show characteristic curves of the electric motor 17 under peak operating conditions, which are utilisable only for a short period of time.

The torque curve T1 is substantially constant as the speed of the electric motor 17 varies.

The power curve P1 increases in a substantially linear manner as the speed of the electric motor 17 increases.

The torque curve T2 is substantially constant below a speed threshold value R1 and decreases rapidly above a threshold value R1, as the speed of the electric motor 17 increases.

The power curve P2 increases in a substantially linear manner up to the speed threshold value R1, and remains substantially constant beyond the speed threshold value R1 as the speed of the electric motor 17 increases.

With reference to Figure 5, a graph of efficiency curves E1 and E2 of one of the variable displacement pumps 23, 24, 25, 26 and 27 is shown as a function of pump speed 23, 24, 25, 26 or 27 for different pump displacement values 23, 24, 25, 26 or 27.

In particular, the efficiency curve E1 shows the efficiency of the pump 23, 24, 25, 26 or 27 as a function of the pump speed 23, 24, 25, 26 or 27 at a first pump displacement value 23, 24, 25, 26 or 27.

The efficiency curve E2 represents the efficiency of the pump 23, 24, 25, 26 or 27 as a function of pump speed 23, 24, 25, 26 or 27 at a second pump displacement value 23, 24, 25, 26 or 27.

The curves E1 and E2 have respective points of maximum efficiency at respective pump speed values R2 and R3 of the pump 23, 24, 25, 26 or 27.

The mechanical transmission 28 has a transmission ratio fixed between the rotation speed of the electric motor 17 and the rotation speed of each of the pumps 23, 24, 25, 26 and 27. In other words, the speed of the electric motor 17 is proportional to the speed of each of the pumps 23, 24, 25, 26 and 27.

The control device 30 is configured to independently control the speed of the electric motor 17 and the displacement of the pumps 23, 24, 25, 26 and 27 so as to optimize the operating efficiency of the crawler vehicle 1.

In this way, it is possible to vary both the speed of the electric motor 17 and the displacement of the pumps 23, 24, 25, 26 and 27, so as to work at the point of maximum efficiency of said pumps 23, 24, 25, 26 and 27 while at the same time guaranteeing the power request of the hydraulic motors 11, 13, 15, 18 and 19 in specific operating requirements.

By way of example, since the torque curves T1 and T2 are substantially constant below the threshold value R1, it is possible to vary the speed of the electric motor 17 below the threshold value R1 to allow the rotation of the pumps 23, 24, 25, 26 and 27 at the speed values R2, R3 corresponding to respective points of maximum efficiency, so as to optimize the efficiency of the pumps 23, 24, 25, 26 and 27 while keeping the torque of the electric motor 17 constant.

In particular, the control device 30 is configured to acquire the speed of the electric motor 17 and the displacement of the pumps 23, 24, 25, 26, 27 and to independently control the speed of the electric motor 17 and the displacement of the plurality of pumps 23, 24, 25, 26, 27 by means of respective closed-loop controls depending respectively on the acquired speed of the electric motor 17 and the acquired displacement of the plurality of pumps 23, 24, 25, 26, 27.

With reference to Figure 3, the control device 30 comprises a plurality of hydraulic power sensors 35, each of which is configured to acquire a power signal correlated with a respective pump 23, 24, 25, 26, and 27. In particular, the control device 30 comprises a hydraulic power sensor 35 for each of the pumps 23, 24, 25, 26 and 27.

According to one, non-limiting embodiment of the present invention, each hydraulic power sensor 35 is a pressure sensor by virtue of the fact that in transmission, power is related to pressure.

The control device 30 is configured to acquire a requested hydraulic power from each hydraulic motor 11, 13, 15, 18, 19 to control the speed of the electric motor 17 and/or the displacement of the respective pump 23, 24, 25, 26, 27 to satisfy the requested hydraulic power; and to acquire the hydraulic power transmitted to each hydraulic motor 11, 13, 15, 18, 19 by means of the hydraulic power sensors 35.

From an operating point of view, the requested hydraulic power is the product of a requested torque, determined by pressure acquisition using pressure sensors 35 in the hydraulic circuit of the power transmission assembly 20, and a requested speed, determined, by way of example, by the position of an acceleration pedal controlled by an operator of the crawler vehicle 1.

The requested power is then calculated as a function of the pressure values acquired and related to the requested torque and the requested speed values.

Once the power request has been calculated, the electric motor 17 must deliver the power necessary to meet the power request, clearly within the limits of the maximum power of the electric motor 17.

The delivery of the requested power is modulated by varying two parameters: the speed of the electric motor 17; and the displacement of the pump 23. These parameters are selected so as to optimize the efficiency of the electric motor 17 and the pump 23. Although these considerations apply to each of pumps 23, 24, 25, 26, and 27, for simplicity of discussion, only pump 23 is considered.

In the case described herein, the control device 30 is configured to acquire a requested running speed of the crawler vehicle 1, for example the position of an accelerator device such as an acceleration pedal; control the speed of the electric motor 17 and/or the displacement of the pumps 23 and 24 to substantially match the requested running speed.

As a further control, the acquisition of the running speed of the crawler vehicle 1 and its comparison with the requested running speed is envisaged.

In addition, the control device 30 comprises a computer 36, which comprises a memory containing a program for controlling the crawler vehicle 1 and is configured to run said program.

The computer 36 can be programmed directly or is configured to read program media via special interfaces.

In use and with reference to Figure 3, the control device 30 controls the crawler vehicle 1 both when the crawler vehicle 1 is running and in operations related to the use of the tools 7 so as to optimize the energy consumption of the crawler vehicle 1.

In particular, the control device 30 controls the speed of the electric motor 17 and the displacement of the pumps 23, 24, 25, 26 and 27, so as to drive the pumps 23, 24, 25, 26 and 27 around the maximum efficiency points R2, R3 (Figure 5).

In more detail, in the event that the position of the crawler vehicle 1 needs to be varied, an operator of the crawler vehicle 1, for example by operating an acceleration pedal, determines the requested running speed of the crawler vehicle 1. The control device 30 acquires the requested torque by means of the pressure sensors 35 and the requested running speed and determines the hydraulic power requested of the hydraulic motors 18 and 19. The requested torque is an effect of the conditions under which the crawler vehicle operates 1. By way of example, in the case of advancing up a slope, the requested torque is determined by the force of gravity to be counteracted acting on the crawler vehicle 1.

Subsequently, the control device 30 controls the speed of the electric motor 17 and/or the displacement of the pumps 23 and 24 to meet the requested hydraulic power and so as to drive the pumps 23 and 24 around the point of maximum efficiency R2, R3 (Figure 5).

The hydraulic power transmitted by the pumps 23 and 24 to the hydraulic motors 18 and 19 is determined via the hydraulic power sensors 35 and acquired by the control device 30 so as to control the hydraulic power transmitted via a first closed loop.

In addition, the control device 30 controls the speed of the electric motor 17 and/or the displacement of the pumps 23 and 24 to substantially match the requested running speed, and acquires the running speed of the crawler vehicle 1, so as to control the running speed of the crawler vehicle 1 via a second closed loop.

In more detail, the first closed loop is internal with respect to the second closed loop.

Although control methods of the power transmitted to the hydraulic motors 18 and 19 and the running speed of the crawler vehicle 1 have been described, the same control methods also apply to controlling the power transmitted to the hydraulic motors 11, 13 and 15 and the rotational speed thereof.

It is evident that variations may be made to the present invention while remaining within the scope of protection of the appended claims.

## Claims

1. A snow groomer for the preparation of ski runs; the snow groomer (1) comprising:
- a frame (2);
- a cabin (8) mounted on the frame (2);
- a first and a second drive wheel (5, 6) driven by a first and a second hydraulic motor (18, 19) respectively; and
- a power transmission assembly (20) configured to transmit power from the electric motor (17) to said hydraulic motors (18, 19). **characterized by** a battery assembly (16, 22) and an electric motor (17) fed by the battery assembly (16, 22), which are mounted on said frame (2) behind the cabin (8) and mainly under the cabin (8).

2. The snow groomer as claimed in Claim 1, and comprising at least one tool (7) connected in movable way to the frame (2) and actuated by one respective further hydraulic motor (11; 13; 15).

3. The snow groomer as claimed in Claim 2, wherein the power transmission assembly (20) comprises a first pump (23) hydraulically connected to the first hydraulic motor (18); a second pump (24) hydraulically connected to the second hydraulic motor (19); at least a third pump (25; 26; 27) hydraulically connected to the respective further hydraulic motor (11; 13; 15); and a mechanical transmission (28), which is placed between the electric motor (17) and the pumps (23, 24, 25; 26; 27) and is configured to distribute the power supplied by the electric motor (17) between the pumps (23, 24, 25; 26; 27); said pumps (23, 24, 25; 26; 27) being of variable displacement.

4. The snow groomer as claimed in any one of the foregoing Claims, and comprising an inverter (21) configured to transmit electric power from the battery assembly (16, 22) to the electric motor (17).

5. The snow groomer as claimed in any one of the foregoing Claims, and comprising an auxiliary power supply assembly (29); in particular, a fuel cell or an internal combustion engine or a further battery assembly; preferably the auxiliary power supply assembly (29) being configured to charge the battery assembly (16, 22) and being removable from the snow groomer (1).

6. The snow groomer as claimed in any one of the foregoing Claims, wherein the battery assembly (16, 22) is coupled to the snow groomer (1) in removable manner, preferably by means of a releasable coupling device, in order to facilitate the replacement of the battery assembly (16, 22).

7. The snow groomer as claimed in any one of Claims 3 to 6, and comprising a control device (30) configured to control the power supplied by the electric motor (17); preferably the control device (30) being configured to independently control the speed of the electric motor (17) and the displacement of the pumps (23, 24, 25, 26, 27) in order to optimize the operational efficiency of the snow groomer (1).

8. The snow groomer as claimed in Claim 7, wherein the control device (30) is configured to acquire the speed of the electric motor (17) and the displacement of the pumps (23, 24, 25; 26; 27); and to control the speed of the electric motor (17) and the displacement of the pumps (23, 24, 25; 26; 27) by means of respective closed loop controls depending respectively on the acquired speed of the electric motor (17) and the acquired displacement of the pumps (23, 24, 25; 26; 27) .

9. The snow groomer as claimed in Claim 7 or 8, wherein the control device (30) is configured to acquire a requested hydraulic power to each hydraulic motor (11; 13; 15; 18; 19); to control the speed of the electric motor (17) and/or the displacement of the respective pump (23; 24; 25; 26; 27) to satisfy the requested hydraulic power; and to acquire the hydraulic power transmitted to each hydraulic motor (11; 13; 15; 18; 19); preferably the control device (30) being configured to acquire a requested running speed of the snow groomer (1); to control the speed of the electric motor (17) and/or the displacement of the pumps (23, 24) to substantially match the requested running speed; and to acquire the running speed of the snow groomer (1).

10. The snow groomer as claimed in any one of Claims 7 to 9, wherein the control device (30) comprises a charge sensor (31) configured to acquire the charge level of the battery assembly (16, 22); the control device (30) being configured to limit the power output of the electric motor (17) when the acquired charge level falls below a predetermined threshold; preferably the control device (30) being configured to calculate and provide a remaining operating time of the snow groomer (1) based on said acquired charge level and on an expected average consumption of the snow groomer (1); preferably the control device (30) being configured to calculate and provide a maximum operating distance based on said acquired charge level, on an expected average consumption of the snow groomer (1) and on at least one between the GPS position of the snow groomer (1), the snowpack characteristics of the ski slopes and the driving style of a snow groomer (1) operator.

11. A method of controlling the snow groomer as claimed in any one of the foregoing Claims; the snow groomer (1) further comprising at least one tool (7) connected to the frame (2) and actuated by a respective further hydraulic motor (11; 13; 15), and a power transmission assembly (20) comprising a plurality of variable displacement pumps (23, 24, 25, 26, 27) and configured to transmit power from the electric motor (17) to said hydraulic motors (11, 13, 15, 18, 19); the method comprising the steps of independently controlling the speed of the electric motor (17) and the displacement of the pumps (23, 24, 25; 26; 27) in order to optimize the operational efficiency of the snow groomer (1).

12. The method as claimed in Claim 11, and comprising the steps of acquiring the speed of the electric motor (17) and acquiring the displacement of the pumps (23, 24, 25; 26; 27); wherein the steps of independently controlling the speed of the electric motor (17) and the displacement of the plurality of pumps (23, 24, 25, 26, 27) are carried out by means of respective closed-loop controls depending respectively on the acquired speed of the electric motor (17) and the acquired displacement of the plurality of pumps (23, 24, 25, 26, 27).

13. The method as claimed in Claim 11 or 12, and comprising the steps of acquiring a requested hydraulic power to each hydraulic motor (11; 13; 15; 18; 19); controlling the speed of the electric motor (17) and/or the displacement of the respective pump (23; 24; 25; 26; 27) to satisfy the requested hydraulic power; and acquiring the hydraulic power transmitted to each hydraulic motor (18, 19); preferably the method comprising the steps of acquiring a requested running speed of the snow groomer (1); controlling the speed of the electric motor (17) and/or the displacement of the pumps (23, 24) to substantially match the requested running speed; and acquiring the running speed of the snow groomer (1).

14. A computer program configured to control a snow groomer (1) and directly loadable into a memory of the computer (36) to carry out the method steps of any one of claims 11 to 13 when the program is implemented by the computer (36).

15. A program product comprising a readable medium on which the program of Claim 14 is stored.

## Patentansprüche

1. Pistenraupe für die Präparierung von Skipisten, wobei die Pistenraupe (1) umfasst:
- einen Rahmen (2);
- eine Kabine (8), die an dem Rahmen (2) montiert ist;
- ein erstes und ein zweites Antriebsrad (5, 6), die durch einen ersten bzw. einen zweiten Hydraulikmotor (18, 19) angetrieben werden; und
- eine Leistungsübertragungsanordnung (20), die konfiguriert ist, Leistung von dem Elektromotor (17) an die Hydraulikmotoren (18, 19) zu übertragen,
**gekennzeichnet durch** eine Batterieanordnung (16, 22) und einen Elektromotor (17), der von der Batterieanordnung (16, 22) gespeist wird, die an dem Rahmen (2) hinter der Kabine (8) und hauptsächlich unter der Kabine (8) montiert sind.

2. Pistenraupe nach Anspruch 1, und umfassend zumindest ein Werkzeug (7), das beweglich mit dem Rahmen (2) verbunden ist und durch einen jeweiligen weiteren Hydraulikmotor (11; 13; 15) betätigt wird.

3. Pistenraupe nach Anspruch 2, wobei die Leistungsübertragungsanordnung (20) eine erste Pumpe (23), die hydraulisch mit dem ersten Hydraulikmotor (18) verbunden ist; eine zweite Pumpe (24), die hydraulisch mit dem zweiten Hydraulikmotor (19) verbunden ist; zumindest eine dritte Pumpe (25; 26; 27), die hydraulisch mit dem jeweiligen weiteren Hydraulikmotor (11; 13; 15) verbunden ist; und ein mechanisches Getriebe (28) umfasst, das zwischen dem Elektromotor (17) und den Pumpen (23, 24, 25; 26; 27) platziert und konfiguriert ist, die von dem Elektromotor (17) zugeführte Leistung zwischen den Pumpen (23, 24, 25; 26; 27) zu verteilen; wobei die Pumpen (23, 24, 25; 26; 27) von variabler Verdrängung sind.

4. Pistenraupe nach einem der vorhergehenden Ansprüche, und umfassend einen Wechselrichter (21), der konfiguriert ist, elektrische Leistung von der Batterieanordnung (16, 22) an den Elektromotor (17) zu übertragen.

5. Pistenraupe nach einem der vorhergehenden Ansprüche, und umfassend eine Hilfsleistungsversorgungsanordnung (29); insbesondere eine Brennstoffzelle oder einen Verbrennungsmotor oder eine weitere Batterieanordnung; wobei die Hilfsleistungsversorgungsanordnung (29) vorzugsweise konfiguriert ist, die Batterieanordnung (16, 22) zu laden, und von der Pistenraupe (1) entfernbar ist.

6. Pistenraupe nach einem der vorhergehenden Ansprüche, wobei die Batterieanordnung (16, 22) lösbar mit der Pistenraupe (1) gekoppelt ist, vorzugsweise mittels einer lösbaren Kopplungsvorrichtung, um den Austausch der Batterieanordnung (16, 22) zu erleichtern.

7. Pistenraupe nach einem der Ansprüche 3 bis 6, und umfassend eine Steuerungs- bzw. Regelungsvorrichtung (30), die konfiguriert ist, die von dem Elektromotor (17) zugeführte Leistung zu steuern bzw. zu regeln; wobei die Steuerungs- bzw. Regelungsvorrichtung (30) vorzugsweise konfiguriert ist, die Drehzahl des Elektromotors (17) und die Verdrängung der Pumpen (23, 24, 25, 26, 27) unabhängig zu steuern bzw. zu regeln, um die Betriebseffizienz der Pistenraupe (1) zu optimieren.

8. Pistenraupe nach Anspruch 7, wobei die Steuerungs- bzw. Regelungsvorrichtung (30) konfiguriert ist, die Drehzahl des Elektromotors (17) und die Verdrängung der Pumpen (23, 24, 25; 26; 27) zu erfassen; und die Drehzahl des Elektromotors (17) und die Verdrängung der Pumpen (23, 24, 25; 26; 27) mittels jeweiliger Regelungen mit geschlossenem Regelkreis in Abhängigkeit jeweils von der erfassten Drehzahl des Elektromotors (17) und der erfassten Verdrängung der Pumpen (23, 24, 25; 26; 27) zu steuern bzw. zu regeln.

9. Pistenraupe nach Anspruch 7 oder 8, wobei die Steuerungs- bzw. Regelungsvorrichtung (30) konfiguriert ist, eine angeforderte hydraulische Leistung für jeden Hydraulikmotor (11; 13; 15; 18; 19) zu erfassen; die Drehzahl des Elektromotors (17) und/oder die Verdrängung der jeweiligen Pumpe (23; 24; 25; 26; 27) zu steuern bzw. zu regeln, um die angeforderte hydraulische Leistung zu erfüllen; und die an jeden Hydraulikmotor (11; 13; 15; 18; 19) übertragene hydraulische Leistung zu erfassen; wobei die Steuerungs- bzw. Regelungsvorrichtung (30) vorzugsweise konfiguriert ist, eine angeforderte Fahrgeschwindigkeit der Pistenraupe (1) zu erfassen; die Drehzahl des Elektromotors (17) und/oder die Verdrängung der Pumpen (23, 24) zu steuern bzw. zu regeln, um im Wesentlichen der angeforderten Fahrgeschwindigkeit zu entsprechen; und die Fahrgeschwindigkeit der Pistenraupe (1) zu erfassen.

10. Pistenraupe nach einem der Ansprüche 7 bis 9, wobei die Steuerungs- bzw. Regelungsvorrichtung (30) einen Ladepegelsensor (31) umfasst, der konfiguriert ist, den Ladepegel der Batterieanordnung (16, 22) zu erfassen; wobei die Steuerungs- bzw. Regelungsvorrichtung (30) konfiguriert ist, die Leistungsabgabe des Elektromotors (17) zu begrenzen, wenn der erfasste Ladepegel unter eine vorbestimmte Schwelle fällt; wobei die Steuerungs- bzw. Regelungsvorrichtung (30) vorzugsweise konfiguriert ist, eine verbleibende Betriebszeit der Pistenraupe (1) basierend auf dem erfassten Ladepegel und einem erwarteten durchschnittlichen Verbrauch der Pistenraupe (1) zu berechnen und bereitzustellen; wobei die Steuerungs- bzw. Regelungsvorrichtung (30) vorzugsweise konfiguriert ist, eine maximale Betriebsstrecke basierend auf dem erfassten Ladepegel, einem erwarteten durchschnittlichen Verbrauch der Pistenraupe (1) und zumindest einem von der GPS-Position der Pistenraupe (1), den Schneedeckeneigenschaften der Skipisten und dem Fahrstil einer Bedienperson einer Pistenraupe (1) zu berechnen und bereitzustellen.

11. Verfahren zum Steuern bzw. Regeln der Pistenraupe nach einem der vorhergehenden Ansprüche; wobei die Pistenraupe (1) ferner zumindest ein Werkzeug (7), das mit dem Rahmen (2) verbunden und durch einen jeweiligen weiteren Hydraulikmotor (11; 13; 15) betätigt wird, und eine Leistungsübertragungsanordnung (20) umfasst, die eine Mehrzahl von Pumpen (23, 24, 25, 26, 27) mit variabler Verdrängung umfasst und konfiguriert ist, Leistung von dem Elektromotor (17) an die Hydraulikmotoren (11, 13, 15, 18, 19) zu übertragen; wobei das Verfahren die Schritte eines unabhängigen Steuerns bzw. Regelns der Drehzahl des Elektromotors (17) und der Verdrängung der Pumpen (23, 24, 25; 26; 27) umfasst, um die Betriebseffizienz der Pistenraupe (1) zu optimieren.

12. Verfahren nach Anspruch 11, und umfassend die Schritte eines Erfassens der Drehzahl des Elektromotors (17) und eines Erfassens der Verdrängung der Pumpen (23, 24, 25; 26; 27); wobei die Schritte des unabhängigen Steuerns bzw. Regelns der Drehzahl des Elektromotors (17) und der Verdrängung der Mehrzahl von Pumpen (23, 24, 25, 26, 27) mittels jeweiliger Regelungen mit geschlossenem Regelkreis in Abhängigkeit jeweils von der erfassten Drehzahl des Elektromotors (17) und der erfassten Verdrängung der Mehrzahl von Pumpen (23, 24, 25, 26, 27) ausgeführt werden.

13. Verfahren nach Anspruch 11 oder 12, und umfassend die Schritte eines Erfassens einer angeforderten hydraulischen Leistung für jeden Hydraulikmotor (11; 13; 15; 18; 19); eines Steuerns bzw. Regelns der Drehzahl des Elektromotors (17) und/oder der Verdrängung der jeweiligen Pumpe (23; 24; 25; 26; 27), um die angeforderte hydraulische Leistung zu erfüllen; und eines Erfassens der an jeden Hydraulikmotor (18, 19) übertragenen hydraulischen Leistung; wobei das Verfahren vorzugsweise die Schritte eines Erfassens einer angeforderten Fahrgeschwindigkeit der Pistenraupe (1); eines Steuerns bzw. Regelns der Drehzahl des Elektromotors (17) und/oder der Verdrängung der Pumpen (23, 24), um im Wesentlichen der angeforderten Fahrgeschwindigkeit zu entsprechen; und eines Erfassens der Fahrgeschwindigkeit der Pistenraupe (1) umfasst.

14. Computerprogramm, das konfiguriert ist, eine Pistenraupe (1) zu steuern bzw. zu regeln, und direkt in einen Speicher des Computers (36) ladbar ist, um die Verfahrensschritte eines der Ansprüche 11 bis 13 auszuführen, wenn das Programm durch den Computer (36) implementiert wird.

15. Programmprodukt, umfassend ein lesbares Medium, auf dem das Programm nach Anspruch 14 gespeichert ist.

## Revendications

1. Dameuse pour la préparation de pistes de ski ; la dameuse (1) comprenant :
- un châssis (2) ;
- une cabine (8) montée sur le châssis (2) ;
- des première et deuxième roues d'entraînement (5, 6) entraînées respectivement par des premier et deuxième moteurs hydrauliques (18, 19) ; et
- un ensemble de transmission de puissance (20) configuré pour transmettre la puissance d'un moteur électrique (17) auxdits moteurs hydrauliques (18, 19),
**caractérisée par** un ensemble batterie (16, 22) et le moteur électrique (17) alimenté par l'ensemble batterie (16, 22), qui sont montés sur ledit châssis (2) derrière la cabine (8) et principalement sous la cabine (8).

2. Dameuse selon la revendication 1, comprenant au moins un outil (7) connecté de manière mobile au châssis (2) et actionné par un moteur hydraulique (11 ; 13 ; 15) supplémentaire respectif.

3. Dameuse selon la revendication 2, dans laquelle l'ensemble de transmission de puissance (20) comprend une première pompe (23) connectée hydrauliquement au premier moteur hydraulique (18) ; une deuxième pompe (24) connectée hydrauliquement au deuxième moteur hydraulique (19) ; au moins une troisième pompe (25 ; 26 ; 27) connectée hydrauliquement au moteur hydraulique (11 ; 13 ; 15) supplémentaire respectif ; et une transmission mécanique (28) qui est placée entre le moteur électrique (17) et les pompes (23, 24, 25 ; 26 ; 27) et qui est configurée pour répartir la puissance fournie par le moteur électrique (17) entre les pompes (23, 24, 25 ; 26 ; 27) ; lesdites pompes (23, 24, 25 ; 26 ; 27) étant des pompes à cylindrée variable.

4. Dameuse selon l'une des revendications précédentes, comprenant un onduleur (21) configuré pour transmettre la puissance électrique de l'ensemble batterie (16, 22) au moteur électrique (17).

5. Dameuse selon l'une des revendications précédentes, comprenant un ensemble d'alimentation de puissance auxiliaire (29) ; en particulier, une pile à combustible, un moteur à combustion interne ou un ensemble batterie supplémentaire ; de préférence, l'ensemble d'alimentation de puissance auxiliaire (29) étant configuré pour charger l'ensemble batterie (16, 22) et pouvant être retiré de la dameuse (1).

6. Dameuse selon l'une des revendications précédentes, dans laquelle l'ensemble batterie (16, 22) est couplé à la dameuse (1) de manière amovible, de préférence au moyen d'un dispositif de couplage libérable, afin de faciliter le remplacement de l'ensemble batterie (16, 22).

7. Dameuse selon l'une des revendications 3 à 6, comprenant un dispositif de commande (30) configuré pour commander la puissance fournie par le moteur électrique (17) ; de préférence, le dispositif de commande (30) étant configuré pour commander indépendamment la vitesse du moteur électrique (17) et la cylindrée des pompes (23, 24, 25 ; 26 ; 27) afin d'optimiser le rendement opérationnel de la dameuse (1).

8. Dameuse selon la revendication 7, dans laquelle le dispositif de commande (30) est configuré pour acquérir la vitesse du moteur électrique (17) et la cylindrée des pompes (23, 24, 25 ; 26 ; 27) ; et pour commander la vitesse du moteur électrique (17) et la cylindrée des pompes (23, 24, 25 ; 26 ; 27) au moyen de commandes en boucle fermée respectives dépendant respectivement de la vitesse acquise du moteur électrique (17) et de la cylindrée acquise des pompes (23, 24, 25 ; 26 ; 27).

9. Dameuse selon la revendication 7 ou 8, dans laquelle le dispositif de commande (30) est configuré pour acquérir une puissance hydraulique requise pour chaque moteur hydraulique (11 ; 13 ; 15 ; 18, 19) ; pour commander la vitesse du moteur électrique (17) et/ou la cylindrée de la pompe (23, 24, 25 ; 26 ; 27) respective afin de satisfaire à la puissance hydraulique requise ; et pour acquérir la puissance hydraulique transmise pour chaque moteur hydraulique (11 ; 13 ; 15 ; 18, 19) ; de préférence, le dispositif de commande (30) étant configuré pour acquérir une vitesse de course demandée de la dameuse (1) ; pour commander la vitesse du moteur électrique (17) et/ou la cylindrée des pompes (23, 24) afin de les adapter sensiblement à la vitesse de course demandée ; et pour acquérir la vitesse de course de la dameuse (1).

10. Dameuse selon l'une des revendications 7 à 9, dans laquelle le dispositif de commande (30) comprend un capteur de charge (31) configuré pour acquérir le niveau de charge de l'ensemble batterie (16, 22) ; le dispositif de commande (30) étant configuré pour limiter la puissance sortie du moteur électrique (17) lorsque le niveau de charge acquis passe en dessous d'un seuil prédéterminé ; de préférence, le dispositif de commande (30) étant configuré pour calculer et fournir un temps de fonctionnement restant de la dameuse (1) sur la base dudit niveau de charge acquis et d'une consommation moyenne attendue de la dameuse (1) ; de préférence, le dispositif de commande (30) étant configuré pour calculer et fournir une distance de fonctionnement maximale sur la base dudit niveau de charge acquis, d'une consommation moyenne attendue de la dameuse (1) et d'au moins un paramètre parmi la position GPS de la dameuse (1), les caractéristiques du manteau neigeux des pentes de ski et le style de conduite d'une personne utilisant la dameuse (1).

11. Procédé de commande de la dameuse selon l'une des revendications précédentes ; où la dameuse (1) comprend en outre au moins un outil (7) connecté au châssis (2) et actionné par un moteur hydraulique (11 ; 13 ; 15) supplémentaire respectif, et un ensemble de transmission de puissance (20) comprenant une pluralité de pompes (23, 24, 25 ; 26 ; 27) à cylindrée variable et configuré pour transmettre la puissance dudit moteur électrique (17) auxdits moteurs hydrauliques (11 ; 13 ; 15 ; 18, 19) ; le procédé comprenant les étapes de commande de la vitesse du moteur électrique (17) et de commande de la cylindrée des pompes (23, 24, 25 ; 26 ; 27) de manière indépendante afin d'optimiser le rendement opérationnel de la dameuse (1).

12. Procédé selon la revendication 11, comprenant les étapes d'acquisition de la vitesse du moteur électrique (17) et d'acquisition de la cylindrée des pompes (23, 24, 25 ; 26 ; 27) ; dans lequel les étapes de commande de la vitesse du moteur électrique (17) et de commande de la cylindrée de la pluralité de pompes (23, 24, 25 ; 26 ; 27) de manière indépendante sont mises en œuvre respectivement au moyen de commandes en boucle fermée respectives de la vitesse acquise du moteur électrique (17) et de la cylindrée acquise de la pluralité de pompes (23, 24, 25 ; 26 ; 27).

13. Procédé selon la revendication 11 ou 12, comprenant les étapes d'acquisition d'une puissance hydraulique requise pour chaque moteur hydraulique (11 ; 13 ; 15 ; 18, 19) ; de commande de la vitesse du moteur électrique (17) et/ou de la cylindrée de la pompe (23, 24, 25 ; 26 ; 27) respective afin de satisfaire à la puissance hydraulique requise ; et d'acquisition de la puissance hydraulique transmise pour chaque moteur hydraulique (18, 19) ; de préférence, le procédé comprenant les étapes d'acquisition d'une vitesse de course demandée de la dameuse (1) ; de commande de la vitesse du moteur électrique (17) et/ou de la cylindrée des pompes (23, 24) afin de les adapter sensiblement à la vitesse de course demandée ; et d'acquisition de la vitesse de course de la dameuse (1).

14. Programme informatique configuré pour commander une dameuse (1) et pouvant être chargé directement dans une mémoire de l'ordinateur (36) pour mettre en œuvre les étapes du procédé selon l'une des revendications 11 à 13 lorsque le programme est mis en œuvre par l'ordinateur (36).

15. Produit-programme comprenant un support lisible sur lequel est stocké le programme selon la revendication 14.
